# EUROPEAN PATENT SPECIFICATION

(11) **EP 1 858 733 B1**
(45) Date of publication and mention of the grant of the patent: **26.11.2008**
(21) Application number: 06725056.3
(22) Date of filing: 15.03.2006
(51) Int. Cl.: B60R 25/00, E05F 15/16, B60R 16/00, H04B 7/185

(54) **METHOD AND APPARATUS FOR DETECTING AN AUTOMOBILE´S WINDOW REGULATING STATUS**
VERFAHREN UND VORRICHTUNG ZUR ERKENNUNG DES VERSTELLSTATUS EINES FAHRZEUGFENSTERS
PROCEDE ET APPAREIL DE DETECTION D'UNE POSITION DE REGLAGE D'UNE VITRE DE VEHICULE AUTOMOBILE

(30) Priority: 16.03.2005 CN 200510055511
(43) Date of publication of application: 28.11.2007
(73) Proprietor: Continental Automotive GmbH, 30165 Hannover (DE)
(72) Inventor: RAN, Ping, A-1220 Wien (AT)
(86) International application number: PCT/EP2006/060723
(87) International publication number: WO 2006/097477

(56) References cited:
- DE-A1- 10 254 738
- DE-A1- 19 757 335
- US-A1- 2003 141 986

## Description

### I. Technical Field

The present invention relates to an automobile passive safety system, and more particularly, to an automobile's window regulating control apparatus.

### II. Technical Background

Conventional medium and top grade automobiles are all fitted with door and window global shutting function (global closing). Usually it is actuated by remote locking or central locking, and under the prerequisite of ensuring safety, windows' and sunroof's automatic shutting need to have automatic clamp-prevention function. If during a global shutting process an accident (including human element) occurs, which leads to a door or window shutting failure, it would created a hidden risk to the safety of the whole vehicle. This kind of cases can be, for example, when a driver leaves his vehicle, somebody with ill intention may deliberately block a window from shutting by using an obstruction object. Since there is no means to sense the abnormal shutting of the window, the automobile owner may not realize at this moment the abnormal interference to the door shutting by the other person. As a direct consequence, this kind of situation can lead to the theft of the automobile and even to human injury.

DE 197 57 335 discloses such a vehicle with a method for detecting an automobile's window regulating status by using at least one automobile window regulating controller for issuing regulating instructions directly to a window equipment and a window central controller, and by using a bus as the protocol for communication between automobile window regulating motors and the central window controller.

### III. Contents of Invention

Therefore, an object of the present invention is to provide a method and apparatus, which method and apparatus can sense abnormalities occurred during an automobile's window shutting process and warn the automobile owner to take measures to deal with such abnormalities.

Generally speaking, the present invention provides a method and apparatus for detecting an automobile's window shutting status by using a window control switch, a central controller, which receives window regulating requests from the window control switch, sends instructions to windows concerned and makes queries to window motors concerned regarding each window's regulating status; if a concerned window fails to execute a relevant instruction correctly, the central controller actuates an alarm to send out an alarm signal.

According to one aspect of the present invention, it provides a method, which uses a bus (such as a LIN bus) as a protocol for equipment communication, so a door controller can make queries via the LIN bus about the status of a clamp-prevention motor during the global shutting process, and once an abnormality is found (such as a window fails to shut) it will issue an alarming signal to attract the automobile owner's attention.

According to another aspect of the present invention, it provides an apparatus, which comprises at least one type of automobile window control switch and a central controller, which can sense the windows' status during a shutting process, and to warn the automobile owner to take measures to eliminate any obstruction.

Specifically, according to one aspect of the present invention, it discloses a method for detecting whether an automobile's window is shut normally by using at least one automobile window regulating controller for issuing regulating instructions directly to window equipment, a window central controller, and by using a bus as the protocol for communication between automobile window motors and the window central controller, comprising:
Step 1: issuing a window regulating request by said at least one window regulating controller to said central controller via said bus;
Step 2: receiving by said central controller the window regulating request issued by said at least one automobile window regulating controller, and issuing a regulating instruction to a regulating motor of the window that said request concerns;
Step 3: executing said window regulating instruction by said window regulating motor;
Step 4: making a query by said central controller to said window regulating motor regarding the execution status of the window's regulation, and reporting correspondingly by said window regulating motor to said central controller the execution status of said instruction and
Step 4.1: examining by said central controller whether every window concerned has completed its window regulating process: if "Yes", stopping the window's regulating operation; if "No", moving to a step (6);
Step 5: judging whether the time for said window regulating motor to execute said window regulating instruction has gone beyond a limit, if "No", moving to the step 4; if "Yes", moving to a step 7 and
Step 7: actuating by said central controller at least one alarm-unit to send out an alarming signal.

Physically, the automobile window regulating control switch of the present invention can include an automobile key, a remote-controlled central locking, a manual window regulator usually attached to the inner side of an automobile door, etc.

In the present invention, the alarm can be a conventional sound and/or a light alarm. Said alarm also comprises a wireless communication device for sending a communication request/alarm signal to at least one fixed/mobile communication equipment via a public or specialized wireless communication protocol. When said communication request has been received by a receiving party, it can follow a predetermined procedure to report to the receiving party by way of sound or digital signal which window is or which windows are abnormal and what types of abnormality have occurred.

According to a further aspect of the present invention, the above step 4 further comprises Step 4.0: making a query by said central controller to at least one automobile door status sensor regarding an automobile door's shutting status, if "Yes", moving to the step 4.1; if "No", moving to the step 7.

According to a further method of the present invention, the communication bus between said central controller and window motor is, for example, a LIN bus, and said central controller makes queries periodically to said window regulating motor regarding the execution status of a window regulating instruction.

According to a further aspect of the present invention, it discloses an apparatus for detecting whether an automobile's window is shut normally, comprising:
- at least one automobile window regulating control switch, connected to a central controller specified below, for issuing regulating requests to said central controller;
- a central controller, having communication connection with the above at least one window regulating control switch and having connection with all window controllers by a bus protocol, for receiving from said at least one window regulating control switch the window regulating requests and issuing relevant instructions to a concerned window motor controller (at least one controller); and for issuing query instructions to a concerned window motor controller regarding the window's regulating status, and deciding whether the window concerned should carry on the regulating operation or an alarm should be actuated according to the reply from the window motor controller concerned;
- a plurality of window motor controllers, for responding to the window regulating instruction from said central controller and actuating a window motor for a corresponding operation; and for responding to the query instruction regarding window regulating status from said central controller and sending a reply to said central controller;
- at least one alarm-unit for responding to an alarm instruction from said central controller to send out an alarming signal.

According to a further aspect of the present invention, the apparatus of the present invention further comprises at least one automobile door status sensor for sensing whether an automobile door has shut and sending said signal to said central controller, and said central controller processes said signal to decide whether to give an alarm.

### IV. Description of Drawing

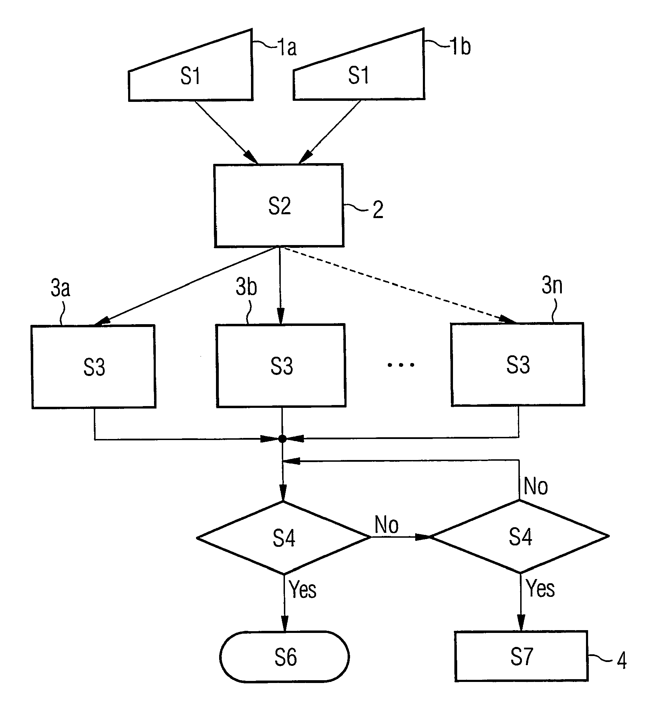

Fig. 1 shows a flow-chart of the method of the present invention and in parallel functional units to perform the single process steps.

### V. Practical Embodiments

As shown in Fig. 1, a central control lock 1a can be a locking combination for collectively opening or shutting an automobile's doors by inserting an automobile key into a key hole and twisting it; 1b represents a remote control automobile lock. Said central control lock 1a or remote control lock 1b issues a request for shutting the automobile doors to the automobile's central controller 2. After having received said request by the central controller 2, it issues to at least one subsidiary controller 3a, ....3n (shown in Fig. 1 as subsidiary controllers based on LIN bus protocol) an instruction to shut the door, and to check continuously the shutting status of the door concerned. When it is confirmed that the door concerned has shut

It can be seen from the description of the present invention, that only the LIN bus is used here as an example for the description of the method and apparatus of the present invention. However, the LIN bus is only one practical embodiment. By using this embodiment, it can effectively solve the technical problem the present invention concerns, and at the same time it can avoid in practical applications the expensive solutions such as using CAN bus.

The number of windows in the present invention is at least one, usually it can be 2, 3, 4, 5 (e.g. 4 windows plus one sunroof) or 6 (e.g. 4 windows at left and right plus one rear window and one sunroof).

There can be a plurality of window regulating control switches 1a; 1b, but it is not necessary for them to issue window regulating requests to said central controller 2 at the same time; normal situations would be that one of them needing an operation would send said request to the central controller 2.

In the above embodiment of the present invention, an automobile's window regulating is used as an example to provide the solution by the present invention. In fact, an automobile's door and window shutting can be done collectively, for example, it can be set that at the time for shutting the automobile's doors, the status of all the automobile's windows is detected and any unshut window would be shut automatically. Therefore, the solution of the present invention covers essentially technical solutions for shutting both automobile's doors and windows at the same time.

## Claims

1. A method for detecting an automobile's window regulating status by using at least one automobile window regulating controller (1a; 1b) for issuing regulating instructions (S1) directly to window equipment, a window central controller (2), and by using a bus as the protocol for communication between automobile window regulating motors (3a, ...3n) and the central window controller (2), comprising the steps:
- S1, issuing a window regulating request by said at least one window regulating controller (1a; 1b) to said central controller (2) via said bus;
- S2, receiving by said central controller (2) the window regulating request issued by said at least one automobile window regulating controller (1a; 1b), and issuing a regulating instruction to a window regulating motor (3a, ...3n) of the window that said request concerns;
- S3, executing said window regulating instruction by said window regulating motor (3a, ...3n);
- S4, making a query by said central controller (2) to said window regulating motor (3a, ...3n) regarding the execution status of the window's regulation, and reporting accordingly by said window regulating motor (3a, ...3n) to said central controller (2) the execution status of said instruction and
- S4.1, examining by said central controller (2) whether every window concerned has completed its window regulating process: if "Yes", stopping the window's regulating operation in a Step S6; if "No", moving to a step S5;
- S5, judging whether the time for said window regulating motor to execute said window regulating instruction has gone beyond a limit, if "No", moving to the step S4; if "Yes", moving to a step S7 and
- S7, actuating by said central controller (2) at least one alarm-unit (4) to send out an alarming signal.

2. The method as specified in claim 1, wherein the step S4 further comprises: S4.0, making a query by said central controller to at least one automobile door status sensor regarding an automobile door's shutting status, if "Yes", moving to the step S4.1; if "No", moving to the step S7.

3. The method as specified in claim 1, wherein said communication bus between said central controller (2) and window regulating motor (3a, ...3n) is a LIN bus, and said central controller makes queries periodically to said window regulating motor (3a, ...3n) regarding the execution status of a window regulating instruction.

4. An apparatus for detecting an automobile's window regulating status, comprising:
- at least one automobile window regulating control switch (1a;1b) connected to a central controller (2) specified below, for issuing regulating requests to said central controller (2);
- a central controller (2), having communication connection with the above at least one window regulating control switch (1a; 1b) and having connection with all window controllers (3a, ....3n) by a bus protocol, for receiving from said at least one window regulating control switch (1a; 1b) the window regulating requests and issuing relevant instructions to a concerned window motor controller (3a, ....3n) (at least one controller); and for issuing query instructions to a concerned window motor controller (3a, ....3n) regarding the window's regulating status, and deciding whether the window concerned should carry on the regulating operation or an alarm should be actuated according to the reply from the window motor controller concerned;
- at least one window motor controller (3a, ....3n), for responding to the window regulating instruction from said central controller (2) and actuating a window motor for a corresponding operation; and for responding to the query instruction regarding window regulating status from said central controller and sending a reply to said central controller (2) and
- at least one alarm-unit (4) for responding to an alarm instruction from said central controller (2) to send out an alarming signal.

5. The apparatus as specified in claim 4, wherein said automobile window regulating control switch (1a; 1b) can be any one of an automobile key, a central control lock or a manual window regulator usually attached to the inner side of an automobile door.

6. The apparatus as specified in claim 4, wherein said alarming signal can be any one of a sound alarm, a light alarm or a sound-light alarm.

7. The apparatus as specified in claim 4, wherein said alarm-unit (4) comprises a wireless communication device for sending a communication request/alarm signal to at least one fixed/mobile communication equipment; after said communication request has been received by a receiving party, it can follow a predetermined procedure to report to the receiving party by way of sound or digital signal which window is or which windows are abnormal and what types of abnormality have occurred.

8. The apparatus as specified in any one of the above claims, **characterized in that** it further comprises at least one automobile door status sensor for sensing whether an automobile door has shut and sending said signal to said central controller (2), and said central controller (2) processes said signal to decide whether to give an alarming signal.

## Patentansprüche

1. Verfahren zum Detektieren des Verstellzustands eines Automobilfensters unter Verwendung wenigstens eines Automobilfenster-Verstellreglers (1a; 1b) zum Erteilen von Verstellbefehlen (S1) direkt an eine Fenstereinrichtung und einen zentralen Fensterregler (2) und unter Verwendung eines Busses als Protokoll für die Kommunikation zwischen Automobilfenster-Verstellmotoren(3a, ...3n) und dem zentralen Fensterregler (2), mit den folgenden Schritten:
- S1, Erteilen einer Fensterverstellanforderung durch den wenigstens einen Fensterverstellregler (1a; 1b) an den zentralen Regler (2) über die Sammelschiene;
- S2, Empfangen der von dem wenigstens einen Automobilfenster-Einstellregler (1a; 1b) erteilten Fensterverstellanforderung durch den zentralen Regler (2) und Erteilen eines Verstellbefehls an einen Fensterverstellmotor (3a ...3n) für das Fenster, welches von der Anforderung betroffen ist;
- S3, Ausführen des Fensterverstellbefehls durch den Fensterverstellmotor (3a ...3n);
- S4, Stellen einer Anfrage durch den zentralen Regler (2) an den Fensterverstellmotor (3a ...3n) betreffend den Ausführungszustand der Fensterverstellung und demgemäß Melden des Ausführungszustands für den Befehl durch den Fensterverstellmotor (3a ...3n) an den zentralen Regler (2) und
- S4.1, Prüfen durch den zentralen Regler (2), ob an jedem betroffenen Fenster dessen Fensterverstellvorgang abgeschlossen ist: bei "Ja" Stoppen des Fensterverstellvorgangs in einem Schritt S6; bei "Nein" Übergehen zu einem Schritt S5;
- S5, Feststellen, ob die Zeit zum Ausführen des Fensterverstellbefehls durch den Fensterverstellmotor einen Grenzwert überschritten hat, bei "Nein" Übergehen zu Schritt S4; bei "Ja" Übergehen zu einem Schritt S7 und
- S7, Betätigen wenigstens einer Alarmeinheit (4) durch den zentralen Regler (2) zum Aussenden eines Warnsignals.

2. Verfahren nach Anspruch 1 wobei Schritt S4 außerdem umfasst: S4.0, Stellen einer Anfrage durch den zentralen Regler an wenigstens einen Automobiltür-Zustandssensor betreffend den Schließzustand einer Automobiltür, bei "Ja" Übergehen zu Schritt S4.1; bei "Nein" Übergehen zu Schritt S7.

3. Verfahren nach Anspruch 1, wobei der Kommunikationsbus zwischen dem zentralen Regler (2) und dem Fensterverstellmotor (3a ...3n) ein LIN-Bus ist und der zentrale Regler (2) periodisch Anfragen an den Fensterverstellmotor (3a ...3n) betreffend die Ausführung eines Fensterverstellbefehls stellt.

4. Vorrichtung zum Detektieren eines Verstellzustands eines Automobilfensters, mit:
- wenigstens einem Steuerschalter (1a; 1b) zum Verstellen von Automobilfenstern, der mit einem im Folgenden beschriebenen zentralen Regler (2) verbunden ist, zum Erteilen von Verstellanforderungen an den zentralen Regler (2);
- einem zentralen Regler (2) mit Kommunikationsverbindung mit dem obigen, wenigstens einen Steuerschalter (1a; 1b) zum Verstellen von Automobilfenstern und mit Verbindung mit allen Fensterreglern (3a ...3n) durch ein Busprotokoll, zum Empfangen der Fensterverstellanforderungen von dem wenigstens einen Steuerschalter (1a; 1b) zum Verstellen von Automobilfenstern und zum Erteilen sachdienlicher Befehle an einen betroffenen Fenstermotorregler (3a ...3n) (wenigstens einen Regler); und zum Erteilen von Anfragebefehlen an einen betroffenen Fenstermotorregler (3a ...3n) betreffend den Verstellzustand des Fensters, und zum Entscheiden darüber, ob an dem betroffenen Fenster den Verstellvorgang weitergeführt werden sollte oder gemäß der Antwort von dem betroffenen Fenstermotorregler eine Alarmvorrichtung betätigt werden sollte;
- wenigstens einem Fenstermotorregler (3a ...3n) zum Ansprechen auf den Fensterverstellbefehl von dem zentralen Regler (2) und zum Betätigen eines Fenstermotors für einen entsprechenden Vorgang; und zum Ansprechen auf den Anfragebefehl betreffend den Fensterverstellzustand von dem zentralen Regler (2) und zum Senden einer Antwort an den zentralen Regler (2), und
- wenigstens einer Alarmeinheit (4) zum Ansprechen auf einen Alarmbefehl von dem zentralen Regler (2) zum Aussenden eines Warnsignals.

5. Vorrichtung nach Anspruch 4, wobei der Steuerschalter (1a; 1b) zum Verstellen von Automobilfenstern ein beliebiger von einem Automobilschlüssel, einem Zentralverriegelungsschloss oder einem manuellen Fensterversteller sein kann, der gewöhnlich an der Innenseite einer Automobiltür befestigt ist.

6. Vorrichtung nach Anspruch 4, wobei das Warnsignal ein beliebiges von einem Tonalarm, einem Lichtalarm oder einem Ton-Licht-Alarm sein kann.

7. Vorrichtung nach Anspruch 4, wobei die Alarmeinheit (4) eine drahtlose Kommunikationsvorrichtung zum Senden einer Kommunikationsanforderung/eines Alarmsignals an wenigstens eine feste/mobile Kommunikationseinrichtung umfasst; und nach dem Erhalt der Kommunikationsanforderung durch die empfangende Seite diese ein vorgegebenes Verfahren zur Meldung an die empfangende Seite mittels eines Ton- oder Digitalsignals befolgen kann, welches Fenster oder welche Fenster unnormal ist bzw. unnormal sind, und welche Arten von Unnormalität aufgetreten sind.

8. Vorrichtung nach einem der obigen Ansprüche, **dadurch gekennzeichnet, dass** sie außerdem wenigstens einen Automobiltür-Zustandssensor zum Sensieren dessen umfasst, ob sich eine Automobiltür geschlossen hat, und zum Senden des Signals an den zentralen Regler (2), und dass der zentrale Regler (2) das Signal verarbeitet, um zu entscheiden, ob ein Warnsignal gegeben wird.

## Revendications

1. Procédé pour détecter l'état de réglage d'une fenêtre d'automobile en utilisant un dispositif de commande (1a, 1b) de réglage de fenêtres d'automobile pour transmettre directement des instructions de réglage (S1) à un équipement de fenêtre, un dispositif de commande central de fenêtres (2), et en utilisant un bus en tant que protocole pour la communication entre les moteurs (3a, ,.. 3n) de réglage des fenêtres d'automobile et le dispositif de commande central de fenêtres (2), comprenant les étapes consistant à :
- S1, envoyer une demande de réglage de fenêtre au moyen dudit au moins un dispositif de commande de réglage de fenêtre (1a, 1b) audit au moins un dispositif de commande central (2) par l'intermédiaire dudit bus ;
- S2, recevoir au moyen dudit dispositif de commande central (2) la demande de réglage de fenêtre envoyée par ledit au moins un dispositif de commande de réglage de fenêtre d'automobile (1a, 1b) et envoyer une instruction de réglage à un moteur de réglage de fenêtre (3a; ...3n) de la fenêtre que ladite demande concerne ;
- S3, exécuter ladite instruction de réglage de fenêtre au moyen dudit moteur de réglage de fenêtre (3a, ...3n) ;
- S4, exécuter au moyen dudit dispositif de commande central (2) une interrogation dudit moteur de réglage de fenêtre (3a, ...3n) au sujet de l'état d'exécution du réglage de fenêtre et signaler en conséquence l'état d'exécution de ladite instruction audit dispositif de commande central (2) au moyen dudit moteur de réglage de fenêtre (3a, ...3n) et
- S4.1, vérifier au moyen dudit dispositif de commande central (2) si chaque fenêtre concernée a terminé son processus de réglage de fenêtre : si "Oui", arrêter l'opération de réglage de fenêtre dans une étape S6 ; si "Non" aller à une étape S5 ;
- S5, juger si le temps demandé par ledit moteur de réglage de fenêtre pour exécuter ladite instruction de réglage de la fenêtre a dépassé une limite, si "Non", passer à l'étape S4 ; si "Oui", passer à une étape S7 et
- S7, actionner au moyen dudit dispositif de commande central (2) au moins une unité d'alarme (4) pour émettre un signal d'alarme.

2. Procédé selon la revendication 1 dans lequel l'étape S4 comprend en outre : S4.0, exécuter au moyen dudit dispositif de commande central une interrogation d'au moins un détecteur d'état de porte d'automobile concernant un état de fermeture de porte d'automobile, si "Oui", passer à l'étape S4.1 ; si "Non", passer à l'étape S7.

3. Procédé selon la revendication 1, dans lequel ledit bus de communication entre ledit dispositif de commande central (2) et ledit moteur de réglage de fenêtre (3a, ...3n) est un bus LIN et ledit dispositif de commande central exécute périodiquement des interrogations dudit moteur de réglage de fenêtre (3a, ...3n) concernant l'état d'exécution d'une instruction de réglage de fenêtre.

4. Appareil pour détecter un état de réglage de fenêtre d'automobile, comprenant :
- au moins un commutateur de commande de réglage de fenêtre d'automobile (1a ; 1b) connecté à un dispositif de commande central (2) spécifié plus loin, destiné à envoyer des demandes de réglage audit dispositif de commande central (2) ;
- un dispositif de commande central (2) ayant une liaison de communication avec le au moins un commutateur de commande de réglage de fenêtre (1a ; 1b) précité et ayant une liaison avec tous les dispositif de commande de fenêtre (3a, ...3n) par un bus protocole, pour recevoir dudit au moins un commutateur de commande de réglage de fenêtre (1a ; 1b) les demandes de réglage de fenêtre et envoyer des instructions correspondantes à un dispositif de commande de moteur de fenêtre concerné (3a, ...3n) (à au moins un dispositif de commande) ; et pour transmettre des instructions d'interrogatioo à un dispositif de commande de moteur de fenêtre concerné (3a, ...3n) au sujet de l'état de réglage de la fenêtre, et décider si la fenêtre concernée doit poursuivre l'opération de réglage ou si une alarme doit être actionnée selon la réponse du dispositif de commande de moteur de fenêtre concerné ;
- au moins un dispositif de commande de moteur de fenêtre (3a, ...3n), destiné à répondre à l'instruction de réglage de fenêtre provenant dudit dispositif de commande central (2) et à actionner un moteur de fenêtre pour une opération correspondante ; et à répondre à l'instruction d'interrogation concernant l'état de réglage de fenêtre provenant dudit dispositif de commande central, et à envoyer une réponse audit dispositif de commande central (2) et
- au moins une unité d'alarme (4) destinée à répondre à une instruction d'alarme provenant dudit dispositif de commande central (2) pour émettre un signal d'alarme.

5. Appareil selon la revendication 4, dans lequel ledit commutateur de commande de réglage de fenêtre d'automobile (1a ; 1b) peut être un quelconque des suivants : une clé d'automobile, une serrure à commande centrale ou un dispositif de réglage de fenêtre manuel habituellement attaché au côté intérieur d'une porte d'automobile.

6. Appareil selon la revendication 4, dans lequel ledit signal d'alarme peut être un quelconque des suivants : une alarme sonore, une alarme lumineuse ou une alarme sonore et lumineuse.

7. Appareil selon la revendication 4, dans lequel ladite unité d'alarme (4) comprend un dispositif de communication sans fil destiné à envoyer un signal de demande de communication/alarme à au moins un premier équipement de communication fixe/mobile ; après que ladite demande de communication a été reçue par une partie réceptrice, elle peut suivre une procédure prédéterminée pour signaler à la partie réceptrice au moyen d'un signal sonore ou numérique quelle est la fenêtre qui est anormale ou quelles sont les fenêtres qui sont anormales et quels sont les types d'anomalies qui se sont produits.

8. Appareil selon une quelconque des revendications précédentes, **caractérisé en ce qu'**il comprend en outre au moins un détecteur d'état de porte d'automobile destiné à détecter si une porte d'automobile s'est fermée et à envoyer ledit signal audit dispositif de commande central (2), et ledit dispositif de commande central (2) traite ledit signal pour décider de donner ou de ne pas donner un signal d'alarme.
